# FASCICULE DE BREVET EUROPEEN

(11) **EP 3 492 883 B1**
(45) Date de publication et mention de la délivrance du brevet: **10.03.2021**
(21) Numéro de dépôt: 18203253.2
(22) Date de dépôt: 30.10.2018
(51) Int. Cl.: G01F 25/00, G01F 22/00, G01F 23/26, G01F 23/28, G01F 23/00

(54) **RÉSERVOIR AVEC SYSTÈME DE MESURE DE VOLUME**
TANK MIT VOLUMENMESSSYSTEM
TANK WITH VOLUME MEASUREMENT SYSTEM

(30) Priorité: 29.11.2017 BE 201705865
(43) Date de publication de la demande: 05.06.2019
(73) Titulaire: Safran Aero Boosters SA, 4041 Herstal (BE)
(72) Inventeur: CORTEQUISSE, Jean-François, 3870 Heers (BE)
(74) Mandataire: Lecomte & Partners

(56) Documents cités:
- CN-A- 103 674 181
- DE-A1- 4 014 990
- DE-A1- 4 025 326
- US-A- 5 207 099
- US-A- 5 670 710
- US-A1- 2015 100 253
- US-A1- 2015 103 630
- US-A1- 2017 105 670

## Description

### Domaine technique

L'invention a trait au domaine des systèmes de mesure de volume dans un réservoir et plus particulièrement dans un réservoir d'huile de turboréacteur pour aéronef.

### Etat de la technique

Le document de brevet publié EP 0 289 172 A2 décrit un réservoir de carburant d'aéronef. Celui-ci comprend plusieurs jauges capacitives (notés 4, 6, 8, 10) pour mesurer la quantité de carburant à différents endroits du réservoir. En combinant les mesures des jauges capacitives, il est possible de calculer un volume total de carburant. Ceci est particulièrement utile pour évaluer une juste mesure du volume de carburant dans un réservoir de forme complexe et dans lequel le carburant se déplace au gré des mouvements de l'aéronef. Ce document montre également que pour parer à une défaillance d'une des jauges capacitives, deux méthodes peuvent être envisagées, l'une nécessitant d'importants moyens de calculs et l'autre étant peu précise. Aucune des deux méthodes ne donne donc entière satisfaction. Le réservoir de ce document est de forme assez simple et un tel système de mesure de volume n'est donc pas adapté à des réservoirs de forme plus complexe qui ne peuvent recevoir de jauges capacitives noyées dans le carburant. Un tel système de mesure du volume n'est pas non plus adapté à un réservoir d'huile de turboréacteur.

Le document US 2015/0100253 A1 décrit un réservoir d'aéronef muni de trois capteurs de pression. Ceux-ci permettent d'évaluer la hauteur de liquide en trois points et d'en déduire l'équation du plan géométrique à la surface de liquide. Connaissant l'orientation de l'aéronef dans l'espace et la géométrie du réservoir, le volume de liquide peut ainsi être déduit. Cette méthode d'estimation du volume de liquide n'est possible que lorsqu'il n'y a aucun remous car dès lors qu'il y a des éclaboussures ou que le liquide ne forme plus un seul volume, la méthode décrite dans ce document donne des résultats incorrects. Il y a donc un besoin pour un capteur de volume qui fonctionne également lorsqu'il y a des remous, ce qui est souvent le cas dans un aéronef.

### Résumé de l'invention

### Problème technique

L'invention a pour objectif de pallier au moins un des inconvénients de l'état de la technique susmentionné. Plus particulièrement, l'invention a pour objectif de proposer un système de mesure du volume qui est plus fiable et plus flexible dans le sens où il peut s'adapter à toute forme de réservoir et à toutes conditions de vol.

### Solution technique

L'invention a pour objet un réservoir de turboréacteur d'aéronef, et en particulier un réservoir d'huile de turboréacteur d'aéronef, le réservoir comprenant : une cavité pouvant contenir un liquide ; une enveloppe délimitant la cavité ; et un dispositif de mesure du volume de liquide contenu dans ladite cavité ; remarquable en ce que le dispositif de mesure comprend au moins trois capteurs ponctuels de détection de liquide, lesdits au moins trois capteurs ponctuels étant disposés sur l'enveloppe de manière à décrire un polygone ; le dispositif de mesure étant configuré pour estimer le volume total de liquide contenu dans la cavité par triangulation à partir des mesures des au moins trois capteurs ponctuels.

Un réservoir pour turboréacteur d'aéronef a des propriétés particulières lui permettant de résister notamment aux températures extrêmes, aux vibrations, à la corrosion et aux chocs.

Le dispositif de mesure peut estimer le volume de liquide au moyen d'un module de calcul recevant des signaux envoyés par les capteurs.

Selon l'invention, les au moins trois capteurs ponctuels définissent un plan dont l'intersection avec l'enveloppe définit une section du réservoir, le dispositif de mesure étant configuré pour calculer la proportion de ladite section et/ou la proportion de l'aire dudit polygone qui est occupée par le liquide afin d'estimer le volume total de liquide. Le calcul peut être fait sur la base des informations relayées par les capteurs, sans nécessairement prendre en compte tous les capteurs ou toutes les combinaisons de capteurs formant le polygone.

Selon un mode avantageux de l'invention, les au moins trois capteurs comprennent au moins un émetteur et au moins un récepteur, le dispositif de mesure du volume comprenant un commutateur pour mesurer séquentiellement les signaux électriques émis par plusieurs combinaisons prédéfinies d'émetteurs-récepteurs, au moins deux combinaisons étant constituées d'un même émetteur avec deux récepteurs différents respectifs et/ou au moins deux combinaisons étant constituées d'un même récepteur avec deux émetteurs différents respectifs, le commutateur étant automatiquement permuté selon un cycle constitué de toutes les combinaisons prédéfinies et le dispositif de mesure étant configuré pour évaluer le volume total du liquide à partir des signaux enregistrés lors d'un cycle.

Selon un mode avantageux de l'invention, le dispositif de mesure est programmé pour effectuer une moyenne des valeurs de volume de liquide calculées pour plusieurs cycles.

Selon un mode avantageux de l'invention, les au moins trois capteurs ponctuels comprennent un ou deux émetteur(s) émettant un rayonnement et respectivement deux ou un récepteur(s) apte(s) à recevoir ce rayonnement, le rayonnement étant acoustique ou électro-magnétique, notamment Rayon X, Ultra-violet ou Infrarouge, le dispositif de mesure calculant l'absorption partielle du rayonnement par le liquide présent entre le ou les émetteur(s) et les ou le récepteur(s).

Selon un mode avantageux de l'invention, les capteurs ponctuels sont des capteurs de proximité capacitifs ou des sondes à ultra-son aptes à détecter une présence de liquide à leur voisinage.

Selon un mode avantageux de l'invention, les capteurs ponctuels comprennent une ou plusieurs anodes et une ou plusieurs cathodes aptes à former des jauges capacitives, le dispositif de mesure calculant la proportion de liquide occupant chaque segment anode-cathode en mesurant la capacité électrique entre chaque anode et chaque cathode.

Selon un mode avantageux de l'invention, dans le sens normal de montage, la cavité présente une hauteur, les au moins trois capteurs ponctuels étant répartis sur la majorité ou toute la hauteur de la cavité et/ou les au moins trois capteurs ponctuels définissent entre eux une pluralité de triangles balayant la majorité de la cavité et/ou les au moins trois capteurs ponctuels sont répartis sur la circonférence de l'enveloppe.

Selon un mode avantageux de l'invention, les capteurs ponctuels sont disposés sur la face extérieure de l'enveloppe.

Selon un mode avantageux de l'invention, l'enveloppe présente au moins une portion transparente au droit des capteurs ponctuels.

Selon un mode avantageux de l'invention, quatre capteurs au plus sont disposés en des points coplanaires.

Selon un mode avantageux de l'invention, les au moins trois capteurs ponctuels comprennent au moins quatre ou au moins six capteurs ponctuels définissant un polyèdre.

Selon un mode avantageux de l'invention, dans le sens normal de montage du réservoir, les capteurs ponctuels définissent plusieurs triangles superposés, le dispositif de mesure étant configuré pour estimer le volume de liquide contenu dans la cavité par triangulation à partir desdits triangles superposés.

Selon un mode avantageux de l'invention, le dispositif de mesure est programmé pour détecter un signal anormal, identifier comme défaillant le capteur générant ce signal, et pour ignorer ce signal anormal dans le calcul du volume total de liquide.

L'invention a également trait à une méthode de mise en œuvre d'un réservoir remarquable en ce que le réservoir est selon l'un des modes de réalisations exposés ci-dessus, la méthode comprenant une étape d'étalonnage du dispositif de détermination du volume de liquide, lors de laquelle sont enregistrés des signaux de référence émis par les capteurs lorsque le réservoir est vide et lorsque le réservoir est plein, et/ou pour des valeurs connues de volume de liquide pour différentes orientations du réservoir.

Selon l'invention, préalablement à l'étalonnage, les capteurs sont disposés aléatoirement en périphérie de la cavité du réservoir.

Selon un mode avantageux de l'invention, le matériau composant l'enveloppe a une permittivité inférieure à celle du liquide destiné à être reçu dans la cavité.

Selon un mode avantageux de l'invention, un capteur défaillant est remplacé et l'étalonnage du capteur de remplacement est effectué par apprentissage en fonction des signaux émis par les autres capteurs et éventuellement des signaux du capteur défaillant avant qu'il ne soit détecté comme défaillant, et l'apprentissage dure jusqu'à ce qu'un indice de confiance soit atteint.

L'invention a également trait à une méthode de détermination du volume de liquide dans un réservoir, le réservoir comprenant des points géométriques en périphérie de la cavité que peut occuper le liquide, la méthode comprenant : une étape de détermination de la proportion du segment défini par la position de deux points géométriques, qui est occupée par le liquide ; et/ou une étape de détermination de la proportion de surface d'un polygone défini par la position de trois points géométriques coplanaires ou plus, qui est occupée par le liquide ; et/ou une étape de détermination de la proportion de la surface d'une section définie par l'intersection d'un plan défini par un polygone de trois points géométriques ou plus coplanaires et de la cavité du réservoir, qui est occupée par le liquide ; et une étape de détermination du volume total de liquide à partir des proportions de segment et/ou de polygone et/ou de section occupées par le liquide pour plusieurs combinaisons possibles de points, les proportions de segment et/ou de polygone et/ou de surface occupées par le liquide étant mesurées à l'aide de capteurs ponctuels positionnés sur lesdits points géométriques.

Selon un mode avantageux de l'invention, lors de l'étape de détermination du volume total de liquide, une moyenne arithmétique desdites proportions pondérées par la longueur des segments et/ou la surface des polygones et/ou la surface de la section, pour plusieurs ou toutes les combinaisons possibles de points géométriques est calculée.

Selon un mode avantageux de l'invention, une étape initiale d'étalonnage permet de définir des proportions de 0% lorsque le réservoir est vide et de 100% lorsque le réservoir est plein pour tous les segments et/ou tous les polygones et/ou toutes les sections.

Selon un mode avantageux de l'invention, lorsqu'une proportion de segment et/ou de polygone et/ou de section occupée par le liquide, calculée d'après les mesures des capteurs, n'est pas comprise entre 0 et 100%, le capteur concerné, au besoin identifié par recoupement de plusieurs mesures pour plusieurs combinaisons de capteurs, est exclu des combinaisons possibles de points géométriques.

Selon un mode avantageux de l'invention, il est prévu dans le réservoir un nombre de capteurs suffisant pour obtenir un calcul du volume total dans une marge de tolérance acceptable, quelle que soit l'inclinaison du réservoir et quelle que soit le taux de remplissage du réservoir. Ainsi, une série d'essais est réalisée itérativement en ajoutant à chaque itération un capteur et en comparant la valeur connue exacte de liquide dans le réservoir avec la valeur calculée à partir des données des capteurs pour diverses inclinaisons du capteur. Tant que la valeur mesurée diverge de la valeur réelle au-delà d'un seuil de tolérance pour au moins une inclinaison, il convient de réitérer le process en rajoutant un capteur.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles, à moins que le contraire ne soit explicitement mentionné.

### Brève description des dessins

D'autres caractéristiques et avantages de la présente invention seront mieux compris à l'aide de la description et des dessins parmi lesquels :
- La figure 1 représente un exemple schématique de réservoir ;
- La figure 2 est une vue en coupe dans le plan P ;
- La figure 3 décrit un autre exemple de réservoir ;
- La figure 4 décrit un commutateur ;
- La figure 5 illustre un diagramme ;
- La figure 6 décrit l'étape 112 du diagramme de la figure 5 en détail.

### Description des modes de réalisation

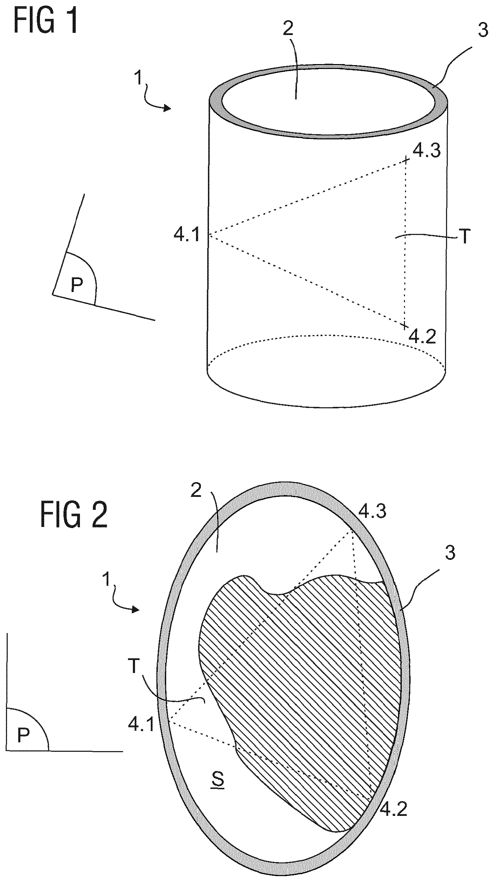

La figure 1 décrit un exemple de réservoir selon l'invention. Le réservoir 1 dispose d'une cavité interne 2 pouvant accueillir un liquide. La cavité est délimitée par une enveloppe 3. Le réservoir de la figure 1 est schématiquement représenté sous la forme d'un cylindre mais le réservoir de l'invention peut prendre toute autre forme. Dans le cas de réservoir d'huile de turboréacteur d'aéronef, le réservoir peut avoir une forme particulièrement complexe.

Sur la périphérie de la cavité 2 sont disposés des points 4.1, 4.2, 4.3 formant un triangle T. Les points 4.1, 4.2, 4.3 sont occupés par trois capteurs. Un capteur peut être un émetteur, un récepteur, une anode, une cathode, ou la combinaison de ceux-ci. Le capteur peut être de différentes natures pour détecter différentes quantités physiques ou chimiques. Les capteurs peuvent être positionnés du côté intérieur de l'enveloppe 3 ou de son côté extérieur. Lorsque les capteurs sont positionnés à l'extérieur de l'enveloppe 3, des portions transparentes ou à tout le moins laissant passer les signaux émis et reçus sont aménagés dans l'enveloppe.

Les capteurs peuvent comporter des émetteurs et récepteurs aptes à fonctionner ensemble. Les émetteurs peuvent émettre des rayonnements acoustique ou électro-magnétiques qui sont perçus par les récepteurs.

Par exemple, le point 4.1 peut accueillir un émetteur d'ondes électro-magnétiques et les points 4.2 et 4.3 peuvent accueillir des récepteurs pour recevoir lesdites ondes. Les ondes reçues par les récepteurs sont comparées aux ondes émises (en amplitude, fréquence, déphasage, etc.) et il est donc possible de savoir la quantité de liquide qu'ont traversée les ondes. En effet, après avoir étalonné le système à vide et à plein, il est possible de savoir quelles proportions des segments [4.1, 4.2] et [4.1, 4.3] sont occupées par le liquide.

Les capteurs peuvent être aussi du type capteur de proximité capacitif ou sonde à ultra-son. Ainsi, les points du triangle T peuvent être occupés par des sondes ultra-son. Chacune peut être orientée vers les deux autres. Avec ces sondes, il est possible de cartographier la présence de liquide dans le triangle T. Les trois cartographies des trois capteurs peuvent être superposées pour obtenir une « image » complète et précise de la section.

Certains types d'ondes peuvent être plus ou moins appropriées à certains types de liquides et l'homme du métier saurait adapter la nature des ondes employées en fonction du liquide reçu dans le réservoir.

Le triangle T définit un plan P passant par les trois points 4.1, 4.2, 4.3.

La figure 2 montre la section du réservoir 1 dans le plan P. Le plan P défini par les points 4.1, 4.2 et 4.3 du triangle T coupe le réservoir 1 en une section S qui dans notre exemple est une ellipse.

La zone hachurée correspond à la présence de liquide. Lorsque le réservoir 1 est en mouvement, le liquide n'occupe pas nécessairement une zone inférieure du réservoir avec un niveau horizontal.

Grâce aux mesures effectuées par les capteurs, il est possible d'estimer la proportion de l'aire du triangle T qui est occupée par le liquide et/ou la proportion de la section S qui est occupée par le liquide.

Par exemple, l'atténuation des signaux électro-magnétiques entre un émetteur et les deux récepteurs permet de définir la proportion des segments du triangle qui est occupée par le liquide. En opérant, par exemple, une moyenne pondérée par la longueur des segments, il est possible d'estimer la proportion de l'aire du triangle qui est occupée par le liquide. Cette estimation est donc une extrapolation des proportions des segments occupés par le liquide.

D'autres modes de calculs peuvent être employés. Par exemple, un étalonnage dans plusieurs positions et pour plusieurs volumes connus de liquide peut permettre un apprentissage des signaux émis par les capteurs en fonction du volume total de liquide. Ainsi, des fonctions mathématiques plus complexes qu'une moyenne pondérée peuvent être employées. Une « boite noire », nourrie par apprentissage ou réseau de neurones pour donner une approximation la plus proche possible de volume de liquide à partir des signaux mesurés peut être utilisée.

Un point du triangle peut comprendre plusieurs capteurs.

Les proportions de segments occupées par le liquide peuvent être estimées pour tous les segments du triangle ou pour seulement deux segments. Il est ainsi possible d'optimiser le temps de calcul ou d'effectuer des contrôles de redondance.

Dans un autre exemple, les capteurs positionnés sur le triangle permettent de cartographier la zone occupée par le liquide et d'en déduire par analyse d'image une proportion du triangle T et/ou de la section S qui est occupée par le liquide.

Lorsque la position des points 4.1, 4.2, 4.3 du triangle T est choisie judicieusement, la proportion de liquide occupant le triangle T permet de donner une bonne approximation de la proportion de liquide occupant le réservoir, et connaissant le volume total du réservoir, en déduire le volume total de liquide dans le réservoir. Les capteurs sont préférablement positionnés sur la majorité de la hauteur de la cavité et répartis sur sa circonférence.

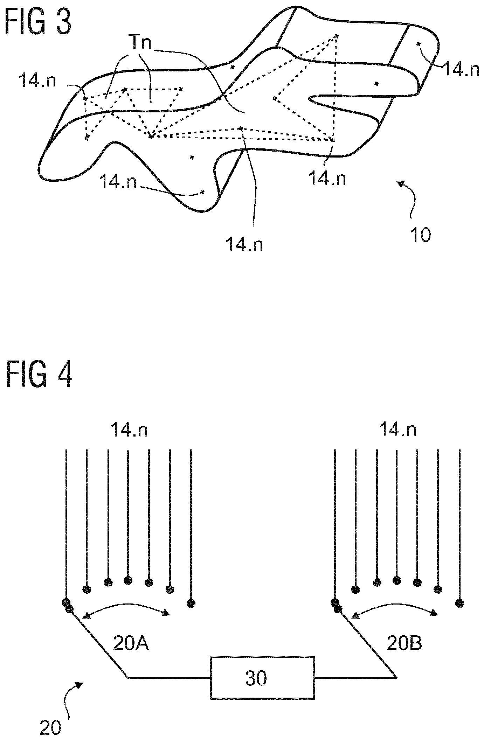

La figure 3 décrit un autre exemple de réservoir selon l'invention. Dans cet exemple, la forme du réservoir est plus complexe. Le réservoir 10 comprend un grand nombre de points notés 14.n, n allant de 1 au nombre total de points. Chaque groupe de trois points 14.n forme un triangle Tn. Un point 14.n donné peut former un grand nombre de triangles avec deux autres quelconque des points 14.n. Sur la figure 3, seuls quelques-uns des triangles Tn sont représentés pour des raisons de clarté du dessin. Les plans définis par les triangles Tn coupent le réservoir pour former des sections (non représentées).

Pour chaque triangle Tn, il est possible de calculer une proportion de liquide présent dans le triangle et/ou dans la section de réservoir correspondante.

En opérant une moyenne, éventuellement pondérée par la surface des triangles et/ou des sections, il est possible d'obtenir une proportion de liquide occupant le volume total du réservoir et donc de connaître le volume total de liquide dans le réservoir.

Il est entendu que plus le réservoir contient de capteurs, plus l'erreur sur l'estimation des proportions dans un triangle donné ou dans une section donnée sera lissée par les calculs dans les autres triangles.

Les proportions de segment, de triangle et/ou de section peuvent être combinés pour l'estimation du volume de liquide. En fonction de la forme du réservoir en particulier, il peut être plus judicieux d'utiliser une des proportions (par exemple celle des sections) plutôt qu'une autre (par exemple celle des triangles). Pour une autre forme de réservoir, une combinaison des deux avec un facteur de pondération plus important, par exemple, pour la proportion de liquide présent dans le triangle, peut être utilisée.

Dans un autre mode de réalisation, plus de trois points coplanaires sont prévus et ceux-ci forment un polygone à plus de trois côtés. Par le même principe que pour un triangle, les proportions de chaque segment qui sont occupés par le liquide peuvent être mesurées et le volume total du liquide peut être calculé.

Le même principe peut être appliqué dans l'espace. Par exemple, 4 points à la périphérie du réservoir formant un tétraèdre sont munis de capteurs. Les signaux mesurés permettent d'établir une proportion en volume du tétraèdre qui est occupée par le liquide puis d'extrapoler au volume total du réservoir. Lorsqu'une multitude de points est prévue à la périphérie de la cavité, des combinaisons de tétraèdres ou de polyèdres peuvent être prédéfinies et la proportion du volume de chaque polyèdre qui est occupée par le liquide peut être estimée avant d'en déduire le volume total du liquide dans le réservoir.

La figure 4 représente un commutateur 20. Il est généralement possible de faire fonctionner tous les capteurs simultanément. Ainsi, si par exemple plusieurs émetteurs et un seul récepteur fonctionnent en même temps, une décomposition du signal (par exemple en série de Fourier) permet de retrouver l'amplitude de signal provenant de chacun des émetteurs émettant à des fréquences différentes et d'ainsi estimer l'atténuation de signal et donc la quantité de liquide entre l'émetteur et chacun des récepteurs.

Cependant, afin de minimiser les interférences entre les différents rayonnements émis, il peut être utile de mesurer les signaux des capteurs séquentiellement. Ainsi, au moins un émetteur et au moins un récepteur sont activés simultanément et les signaux à leurs bornes sont reçus par un module de calcul 30. Ces signaux peuvent être une capacité électrique entre la borne émettrice et la borne réceptrice, ou des signaux entre la terre et l'émetteur, comparés avec des signaux entre la terre et le récepteur.

Dans l'exemple illustré, le commutateur 20 peut comprendre une portion 20A pour sélectionner l'émetteur ou les émetteurs et une portion 20B pour sélectionner le récepteur ou les récepteurs définissant ainsi une combinaison.

Un nombre de combinaisons émetteur(s)-récepteur(s) est défini et le commutateur 20 prend successivement selon un cycle tous les états correspondant à ces combinaisons.

La figure 4 est un schéma simplifié. Des moyens de communication filaires ou sans fils peuvent être prévus entre les capteurs et le module de calcul.

La valeur du volume de liquide dans le réservoir qui est communiquée à l'utilisateur peut être une moyenne des valeurs de liquide calculées pour plusieurs cycles, afin de lisser les imprécisions de mesure en particulier lorsque le réservoir est soumis à des mouvements rapides.

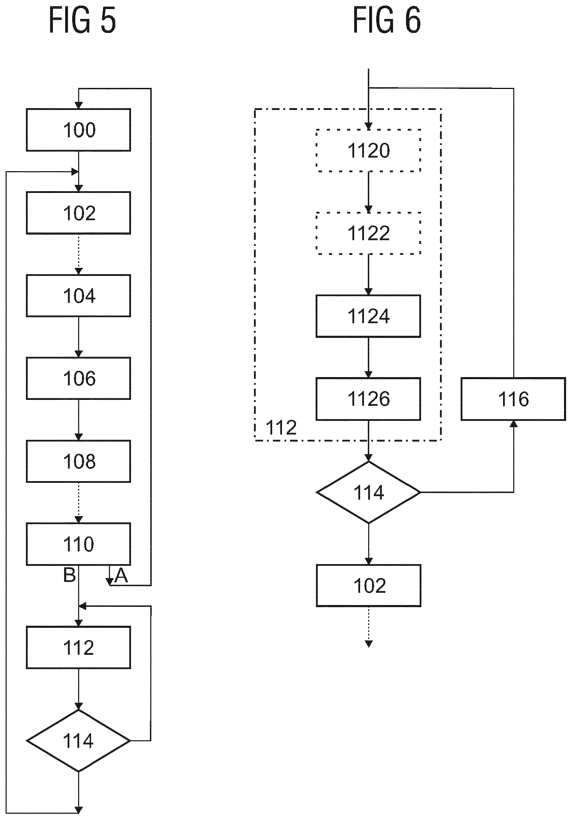

La figure 5 décrit une méthode de mise en oeuvre d'un réservoir selon l'invention. Lors d'une première étape 100 d'étalonnage initial, les capteurs sont étalonnés. Par exemple, un ou plusieurs cycles de mesures tels que décrits précédemment sont effectués avec le réservoir vide et avec le réservoir complètement plein. Ceci permet d'enregistrer les signaux des capteurs dans les conditions extrêmes à vide et à plein. Alternativement ou en complément, des mesures pour d'autres niveaux de liquide connus peuvent être effectuées, et celle-ci peuvent être effectuées avec des orientations variables du réservoir. Ainsi, il est possible de nourrir un algorithme d'apprentissage avec une multitude de signaux et d'y affecter une valeur connue de volume de liquide.

Cette technique d'étalonnage permet de disposer les capteurs aléatoirement sur le réservoir. Le système n'a pas besoin de « savoir » où sont placés les capteurs, ni de connaître la géométrie du réservoir. Même si la précision de la mesure sera favorisée par une multitude de capteurs disposés sur l'ensemble du réservoir, le système de mesure peut fonctionner avec seulement trois capteurs.

Suite à l'étalonnage 100, le réservoir est prêt à être utilisé. Une étape 102 est une étape de mesure ordinaire. Les différentes combinaisons de capteurs émettent des signaux, qui permettent l'évaluation du volume de liquide dans le réservoir conformément aux exemples précédemment illustrés.

Il peut arriver qu'un capteur défaille. Ceci peut donner lieu à des signaux anormaux détectés lors d'une étape 104. Cette étape peut ne jamais se produire, d'où la flèche en trait interrompus. Un signal anormal est tel que la proportion de liquide occupant un segment/polygone/section/polyèdre est calculée comme étant inférieure à 0% ou supérieure à 100%. Comme l'estimation d'une proportion de liquide met en jeux plusieurs capteurs, une étape 106 d'identification du capteur défaillant est nécessaire. Ceci peut se faire par recoupement de plusieurs segments/polygones/sections/polyèdres afin d'isoler le capteur défaillant.

Suite à l'identification 106 du capteur défaillant, les mesures sont effectuées selon une étape 108 lors de laquelle les combinaisons de capteurs comprenant le capteur défaillant sont exclues des combinaisons de capteurs déterminées pour un cycle de mesure. Lorsque le réservoir est muni de multiples capteurs, l'absence d'un capteur dans la mesure n'a qu'un impact limité sur la validité de la mesure.

Le capteur défaillant est remplacé dans l'étape 110. Le capteur de remplacement peut être disposé aléatoirement sur le réservoir mais de préférence il sera positionné au voisinage de la position du capteur défaillant qui peut être retiré. Après le remplacement du capteur défaillant, une étape initiale d'étalonnage peut à nouveau être effectuée, c'est la route indiquée par A sur la figure 5. Comme cette étape peut prendre un certain temps, le système doit pouvoir continuer de fonctionner sans refaire un étalonnage à chaque capteur défaillant. C'est la voie indiquée par B. Ainsi, lors d'une étape suivante 112, de mesure, le système va à la fois mesurer le volume de liquide et tenter d'étalonner le capteur de remplacement, c'est-à-dire évaluer les signaux de références à vide et à plein, et/ou pour des valeurs arbitraires de liquide. Cette étape est détaillée en figure 6.

Suite à l'étape de mesure 112, si le capteur est considéré comme étalonné, une nouvelle mesure ordinaire 102 peut être effectuée. Tant que le capteur n'est pas considéré comme étalonné, le process revient à l'étape 112.

La figure 6 illustre en détail l'étape de mesure 112 de volume avec un capteur de remplacement.

Une première étape optionnelle 1120 consiste en la mesure des proportions de segments/polygones/sections/polyèdres au voisinage du capteur défaillant qui sont occupées par le liquide. Dans ce contexte, le voisinage peut se définir comme des combinaisons de capteurs pour lesquelles la proportion de liquide était environ égale, à un seuil de tolérance près (10% par exemple), à des combinaisons de capteurs englobant le capteur défaillant, avant qu'il ne défaille.

Une seconde étape optionnelle 1122 consiste en l'estimation de la proportion occupée par le liquide des segments/polygones/sections/polyèdres dont le capteur de remplacement forme un point.

A partir de cette estimation 1122 ou directement sur la base des valeurs de référence, par exemple à vide et à plein, ou pour une valeur arbitraire de liquide, du capteur défaillant avant de devenir défaillant, une étape d'assignation 1124 des valeurs de référence du capteur de remplacement, par exemple à vide et à plein, ou pour une valeur arbitraire de liquide, est effectuée.

Lors d'une sous-étape de mesure 1126, le volume total du liquide dans le réservoir est calculé, en prenant en compte les valeurs de références de l'étape 1124 et éventuellement les valeurs des proportions de l'étape 1122 du capteur de remplacement. Le volume du liquide dans le réservoir est aussi calculé sans prendre en compte le capteur de remplacement, c'est-à-dire en excluant des combinaisons de capteurs, le capteur de remplacement.

Lors de l'étape suivante 114, la différence entre les volumes de liquide dans le réservoir calculés avec et sans le capteur de remplacement est calculée. Si cette différence est supérieure à un seuil de confiance (par exemple 3%), le process continue dans l'étape 116 qui indique à l'utilisateur un volume de liquide calculé sans le capteur de remplacement.

Si la différence est inférieure au seuil de confiance, les valeurs de référence estimée pour le capteur de remplacement sont conservées et le cycle de mesure suivant sera une mesure ordinaire 102.

Le seuil de confiance peut être choisi en fonction de la géométrie du réservoir ou de l'exactitude de mesure attendue. Il peut être déterminé par méthode expérimentale ou par simulation numérique.

Une redondance des mesures est possible en multipliant le nombre de capteurs. Un bon compromis entre fiabilité de mesure et simplicité du dispositif peut être obtenu lorsqu'il n'y a pas plus de quatre capteurs coplanaires.

Le nombre de capteurs à monter sur le réservoir peut être défini expérimentalement en en prévoyant autant que nécessaire pour que quel que soit le volume de liquide et quelle que soit l'orientation du réservoir, une précision dans une marge de tolérance acceptable (par exemple 1%) soit atteint. Ce nombre de capteurs peut être défini par étude expérimentale ou par simulation numérique.

Il peut être nécessaire, lorsque les capteurs sont disposés à l'extérieur de l'enveloppe, que la paroi ne joue pas un rôle prépondérant dans l'atténuation des ondes électro-magnétiques. Le matériau de la paroi, au moins en regard des capteurs, pourra donc être choisi de telle sorte qu'il ne pénalise pas la détection du liquide.

Il va de soi que la technologie employée pour mesurer la quantité de liquide au travers d'un segment, d'un triangle, d'un polygone, d'une section ou d'un polyèdre peut être de différentes natures dont seuls quelques exemples sont donnés ci-dessus.

Les technologies peuvent être combinées pour un même réservoir, par exemple en fonction de la géométrie du réservoir, certaines technologies étant limitées ou inadéquates pour des trop grandes distances entre l'émetteur et le récepteur ou inversement pour des trop petites distances.

## Revendications

1. Réservoir (1, 10) de turboréacteur d'aéronef, et en particulier un réservoir d'huile de turboréacteur d'aéronef, le réservoir comprenant :
- une cavité (2) pouvant contenir un liquide ;
- une enveloppe (3) délimitant la cavité (2) ; et
- un dispositif (4.1, 4.2, 4.3, 14.n, 20, 30) de mesure du volume de liquide contenu dans ladite cavité (2) ;
**caractérisé en ce que** :
le dispositif de mesure (4.1, 4.2, 4.3, 14.n, 20, 30) comprend au moins trois capteurs ponctuels de détection de liquide, lesdits au moins trois capteurs ponctuels étant disposés sur l'enveloppe de manière à décrire un polygone (T, Tn) ;
le dispositif de mesure (4.1, 4.2, 4.3, 14.n, 20, 30) est configuré pour estimer le volume total de liquide contenu dans la cavité par triangulation à partir des mesures des au moins trois capteurs ponctuels ;
et **en ce que** les au moins trois capteurs ponctuels définissent un plan (P) dont l'intersection avec l'enveloppe définit une section (S) du réservoir (1), le dispositif de mesure (4.1, 4.2, 4.3, 14.n, 20, 30) étant configuré pour calculer la proportion de ladite section (S) et/ou la proportion de l'aire dudit polygone qui est occupée par le liquide afin d'estimer le volume total de liquide.

2. Réservoir selon la revendication 1, **caractérisé en ce que** les au moins trois capteurs comprennent au moins un émetteur et au moins un récepteur, le dispositif de mesure du volume comprenant un commutateur (20) pour mesurer séquentiellement les signaux émis par plusieurs combinaisons prédéfinies d'émetteurs-récepteurs, au moins deux combinaisons étant constituées d'un même émetteur avec deux récepteurs différents respectifs et/ou au moins deux combinaisons étant constituées d'un même récepteur avec deux émetteurs différents respectifs, le commutateur (20) étant automatiquement permuté selon un cycle constitué de toutes les combinaisons prédéfinies et le dispositif de mesure (4.1, 4.2, 4.3, 14.n, 20, 30) étant configuré pour évaluer le volume total du liquide à partir des signaux enregistrés lors d'un cycle.

3. Réservoir selon la revendication 2, **caractérisé en ce que** le dispositif de mesure (4.1, 4.2, 4.3, 14.n, 20, 30) est configuré pour effectuer une moyenne de valeurs de volume de liquide calculées pour plusieurs cycles.

4. Réservoir selon l'une des revendications 1 à 3, **caractérisé en ce que** les au moins trois capteurs ponctuels : (i) comprennent un ou deux émetteur(s) émettant un rayonnement et respectivement deux ou un récepteur(s) apte(s) à recevoir ce rayonnement, le rayonnement étant acoustique ou électro-magnétique, notamment Rayon X, Ultra-violet ou Infrarouge, le dispositif de mesure calculant l'absorption partielle du rayonnement par le liquide présent entre le ou les émetteur(s) et les ou le récepteur(s) ; (ii) sont des capteurs de proximité capacitifs ou des sondes à ultra-son aptes à détecter une présence de liquide à leur voisinage ; ou (iii) comprennent une ou plusieurs anodes et une ou plusieurs cathodes aptes à former des jauges capacitives, le dispositif de mesure calculant la proportion de liquide occupant chaque segment anode-cathode en mesurant la capacité électrique entre chaque anode et chaque cathode.

5. Réservoir selon l'une des revendications 1 à 4, **caractérisé en ce que** dans le sens normal de montage, la cavité présente une hauteur, les au moins trois capteurs ponctuels étant répartis sur la majorité ou toute la hauteur de la cavité (2) et/ou les au moins trois capteurs ponctuels définissent entre eux une pluralité de triangles balayant la majorité de la cavité (2) et/ou les au moins trois capteurs ponctuels sont répartis sur la circonférence de l'enveloppe (3).

6. Réservoir selon l'une des revendications 1 à 5, caractérisé en ce les capteurs ponctuels sont disposés sur la face extérieure de l'enveloppe (3), l'enveloppe (3) présentant préférentiellement au moins une portion transparente au droit des capteurs ponctuels.

7. Réservoir selon l'une des revendications 1 à 6, **caractérisé en ce que** les au moins trois capteurs ponctuels comprennent au moins quatre ou au moins six capteurs ponctuels définissant un polyèdre.

8. Réservoir selon la revendication 1 à 7, **caractérisé en ce que** dans le sens normal de montage du réservoir, les capteurs ponctuels définissent plusieurs triangles superposés, notamment selon la direction de mesure du niveau dans le réservoir, le dispositif de mesure (4.1, 4.2, 4.3, 14.n, 20, 30) étant configuré pour estimer le volume de liquide contenu dans la cavité par triangulation à partir desdits triangles superposés.

9. Méthode de mise en œuvre d'un réservoir (1, 10), **caractérisée en ce que** le réservoir (1, 10) est selon l'une des revendications 1 à 8, la méthode comprenant une étape d'étalonnage (100) du dispositif de détermination du volume de liquide, lors de laquelle sont enregistrés des signaux de référence émis par les capteurs lorsque le réservoir (1, 10) est vide et lorsque le réservoir (1, 10) est plein, et/ou pour des valeurs connues de volume de liquide pour différentes orientations du réservoir (1, 10), et **en ce que** préalablement à l'étalonnage (100), les capteurs sont disposés aléatoirement en périphérie de la cavité (2) du réservoir (1, 10).

10. Méthode selon la revendication 9, **caractérisée en ce que** le matériau composant l'enveloppe (3) a une permittivité inférieure à celle du liquide destiné à être reçu dans la cavité (2).

11. Méthode selon l'une des revendications 9 à 10, **caractérisée en ce qu'**un capteur défaillant est remplacé et l'étalonnage du capteur de remplacement est effectué par apprentissage en fonction des signaux émis par les autres capteurs et éventuellement des signaux du capteur défaillant avant qu'il ne soit détecté comme défaillant, et l'apprentissage dure jusqu'à ce qu'un indice de confiance soit atteint.

12. Méthode de détermination du volume de liquide dans un réservoir (1, 10), le réservoir comprenant des points géométriques (4.1, 4.2, 4.3, 14.n) en périphérie de la cavité (2) que peut occuper le liquide, la méthode comprenant :
- une étape de détermination de la proportion du segment ([4.1, 4.2]) défini par la position de deux points géométriques (4.1, 4.2), qui est occupée par le liquide ; et/ou
- une étape de détermination de la proportion de surface d'un polygone (T, Tn) défini par la position de trois points géométriques coplanaires ou plus, qui est occupée par le liquide ; et/ou
- une étape de détermination de la proportion de la surface d'une section (S) définie par l'intersection d'un plan défini par un polygone de trois points géométriques (4.1, 4.2, 4.3) ou plus coplanaires et de la cavité (2) du réservoir (1, 10), qui est occupée par le liquide ;
- et une étape de détermination du volume total de liquide à partir des proportions de segment et/ou de polygone et/ou de section occupées par le liquide pour plusieurs combinaisons possibles de points (4.1, 4.2, 4.3, 14.n),
les proportions de segment et/ou de polygone et/ou de surface occupées par le liquide étant mesurées à l'aide de capteurs ponctuels positionnés sur lesdits points géométriques (4.1, 4.2, 4.3, 14.n).

13. Méthode selon la revendication 12, **caractérisée en ce que** lors de l'étape de détermination du volume total de liquide, une moyenne arithmétique desdites proportions pondérées par la longueur des segments ([4.1, 4.2], [4.1, 4.3]) et/ou la surface des polygones (T, Tn) et/ou la surface de la section (S), pour plusieurs ou toutes les combinaisons possibles de points géométriques est calculée.

14. Méthode selon la revendication 12 ou 13, **caractérisée en ce qu'**une étape initiale d'étalonnage (100) permet de définir des proportions de 0% lorsque le réservoir est vide et de 100% lorsque le réservoir est plein pour tous les segments ([4.1, 4.2], [4.1, 4.3]) et/ou tous les polygones (T, Tn) et/ou toutes les sections (S).

15. Méthode selon l'une des revendications 12 à 14, **caractérisée en ce que** lorsqu'une proportion de segment ([4.1, 4.2], [4.1, 4.3]) et/ou de polygone (T, Tn) et/ou de section (S) occupée par le liquide, calculée d'après les mesures des capteurs, n'est pas comprise entre 0 et 100%, le capteur concerné, au besoin identifié par recoupement (106) de plusieurs mesures pour plusieurs combinaisons de capteurs, est exclu des combinaisons possibles de points géométriques.

## Patentansprüche

1. Tank (1, 10) für ein Flugzeug-Turbostrahltriebwerk, insbesondere ein Öltank für ein Flugzeug-Turbostrahltriebwerk, wobei der Tank Folgendes umfasst:
- einen Hohlraum (2), der eine Flüssigkeit aufnehmen kann;
- eine Hülle (3), die den Hohlraum (2) begrenzt; und
- eine Vorrichtung (4.1, 4.2, 4.3, 14.n, 20, 30) zur Messung des in dem Hohlraum (2) enthaltenen Flüssigkeitsvolumens;
**dadurch gekennzeichnet, dass**:
die Messvorrichtung (4.1, 4.2, 4.3, 14.n, 20, 30) mindestens drei Punktsensoren zum Nachweis von Flüssigkeit umfasst, wobei die mindestens drei Punktsensoren auf der Hülle so angeordnet sind, dass sie ein Polygon (T, Tn) beschreiben;
die Messvorrichtung (4.1, 4.2, 4.3, 14.n, 20, 30) so ausgelegt ist, dass sie das Gesamtvolumen der im Hohlraum enthaltenen Flüssigkeit durch Triangulation auf Grundlage der Messungen der mindestens drei Punktsensoren schätzt;
und dass die mindestens drei Punktsensoren eine Ebene (P) definieren, deren Schnitt mit der Hülle einen Querschnitt (S) des Tanks (1) definiert, wobei die Messvorrichtung (4.1, 4.2, 4.3, 14.n, 20, 30) so ausgelegt ist, dass sie den Anteil des genannten Querschnitts (S) und/oder den Anteil der Fläche des genannten Polygons, der von der Flüssigkeit eingenommen wird, berechnet, um das Gesamtvolumen der Flüssigkeit zu schätzen.

2. Tank nach Anspruch 1, **dadurch gekennzeichnet, dass** die mindestens drei Sensoren mindestens einen Sender und mindestens einen Empfänger umfassen, wobei die Volumenmessvorrichtung einen Schalter (20) zur sequentiellen Messung der von einer Vielzahl von vordefinierten Sender-Empfänger-Kombinationen ausgesandten Signale umfasst, mindestens zwei Kombinationen, bestehend aus demselben Sender mit jeweils zwei verschiedenen Empfängern und/oder mindestens zwei Kombinationen, bestehend aus demselben Empfänger mit jeweils zwei verschiedenen Sendern, wobei der Schalter (20) in einem Zyklus, bestehend aus allen vorgegebenen Kombinationen, automatisch umgeschaltet wird und wobei die Messvorrichtung (4.1, 4.2, 4.3, 14.n, 20, 30) dazu ausgelegt ist, aus den während eines Zyklus aufgenommenen Signalen das Gesamtvolumen der Flüssigkeit auszuwerten.

3. Tank nach Anspruch 2, **dadurch gekennzeichnet, dass** die Messvorrichtung (4.1, 4.2, 4.3, 14.n, 20, 30) so ausgelegt ist, über mehrere Zyklen berechnete Flüssigkeitsvolumenwerte zu mitteln.

4. Tank nach einem der Ansprüche 1 bis 3, **dadurch gekennzeichnet, dass** die mindestens drei Punktsensoren: (i) einen oder zwei Sender, die Strahlung aussenden, und jeweils zwei oder einen oder mehrere Empfänger umfassen, die in der Lage sind, diese Strahlung zu empfangen, wobei die Strahlung akustisch oder elektromagnetisch ist, insbesondere Röntgen-, Ultraviolett- oder Infrarotstrahlung, wobei die Messvorrichtung die Teilabsorption der Strahlung durch die zwischen dem (den) Sendern und dem (den) Empfängern) vorhandene Flüssigkeit berechnet; (ii) kapazitive Näherungssensoren oder Ultraschallsonden sind, die in der Lage sind, das Vorhandensein von Flüssigkeit in ihrer Nähe zu erfassen; oder (iii) eine oder mehrere Anoden und eine oder mehrere Kathoden umfassen, die in der Lage sind, kapazitive Messgeräte zu bilden, wobei die Messvorrichtung den Anteil der Flüssigkeit, der jedes Anoden-Kathoden-Segment einnimmt, durch Messung der elektrischen Kapazität zwischen jeder Anode und jeder Kathode berechnet.

5. Tank nach einem der Ansprüche 1 bis 4, **dadurch gekennzeichnet, dass** der Hohlraum in der normalen Einbaurichtung eine Höhe aufweist, wobei die mindestens drei Punktsensoren über die Mehrheit oder die gesamte Höhe des Hohlraums (2) verteilt sind und die mindestens drei Punktsensoren zwischen sich eine Vielzahl von Dreiecken definieren, die die Mehrheit des Hohlraums (2) abtasten und/oder die mindestens drei Punktsensoren über den Umfang des Gehäuses (3) verteilt sind.

6. Tank nach einem der Ansprüche 1 bis 5, **dadurch gekennzeichnet, dass** die Punktsensoren an der Außenseite des Gehäuses (3) angeordnet sind, wobei das Gehäuse (3) vorzugsweise mindestens einen transparenten Abschnitt vor den Punktsensoren aufweist.

7. Tank nach einem der Ansprüche 1 bis 6, **dadurch gekennzeichnet, dass** die mindestens drei Punktsensoren mindestens vier oder mindestens sechs Punktsensoren umfassen, die einen Polyeder definieren.

8. Tank nach den Ansprüchen 1 bis 7, **dadurch gekennzeichnet, dass** die Punktsensoren in der normalen Einbaurichtung des Tanks eine Vielzahl von übereinanderliegenden Dreiecken definieren, insbesondere in Abhängigkeit von der Messrichtung des Füllstands im Tank, wobei die Messvorrichtung (4.1, 4.2, 4.3, 14.n, 20, 30) so ausgelegt ist, dass sie das in dem Hohlraum enthaltene Flüssigkeitsvolumen durch Triangulation ausgehend von den übereinanderliegenden Dreiecken schätzt.

9. Verfahren zum Betreiben eines Tanks (1, 10), **dadurch gekennzeichnet, dass** der Tank (1, 10) einem der Ansprüche 1 bis 8 entspricht, wobei das Verfahren einen Kalibrierungsschritt (100) einer Vorrichtung zur Bestimmung des Flüssigkeitsvolumens umfasst, wobei in diesem Schritt von Sensoren ausgesandte Referenzsignale aufgezeichnet werden, wenn der Tank (1), 10) leer ist und wenn der Tank (1, 10) voll ist, und/oder für bekannte Werte des Flüssigkeitsvolumens für verschiedene Ausrichtungen des Tanks (1, 10), und dass vor der Kalibrierung (100) die Sensoren zufällig am Umfang des Hohlraums (2) des Tanks (1, 10) angeordnet sind.

10. Verfahren nach Anspruch 9, **dadurch gekennzeichnet, dass** das die Hülle (3) bildende Material eine Dielektrizitätskonstante aufweist, die niedriger ist als die der in dem Hohlraum (2) aufzunehmenden Flüssigkeit.

11. Verfahren nach einem der Ansprüche 9 bis 10, **dadurch gekennzeichnet, dass** ein defekter Sensor ersetzt wird und die Kalibrierung des Ersatzsensors durch Einlernen in Abhängigkeit von den Signalen der anderen Sensoren und gegebenenfalls den Signalen des defekten Sensors durchgeführt wird, bevor dieser als defekt erkannt wird, und das Einlernen so lange dauert, bis ein Vertrauensindex erreicht ist.

12. Verfahren zur Bestimmung des Flüssigkeitsvolumens in einem Tank (1, 10), wobei der Tank geometrische Punkte (4.1, 4.2, 4.3, 14.n) am Umfang des Hohlraums (2) aufweist, die von der Flüssigkeit eingenommen werden können, wobei das Verfahren Folgendes umfasst:
- einen Schritt zur Bestimmung des Anteils des durch die Position zweier geometrischer Punkte (4.1, 4.2) definierten Segments ([4.1, 4.2]), das von der Flüssigkeit eingenommen wird; und/oder
- einen Schritt zur Bestimmung des Flächenanteils eines Polygons (T, Tn), das durch die Position von drei oder mehr koplanaren geometrischen Punkten definiert ist, das von der Flüssigkeit eingenommen wird; und/oder
- ein Schritt zur Bestimmung des Flächenanteils eines Querschnitts (S), der durch den Schnittpunkt einer durch ein Polygon von drei oder mehr koplanaren geometrischen Punkten (4.1, 4.2, 4.3) definierten Ebene mit dem Hohlraum (2) des Behälters (1, 10), der von der Flüssigkeit eingenommen wird, definiert ist;
- und einen Schritt zur Bestimmung des Gesamtvolumens der Flüssigkeit aus dem von der Flüssigkeit eingenommenen Segment- und/oder Polygon- und/oder Querschnittsverhältnissen für mehrere mögliche Kombinationen von Punkten (4.1, 4.2, 4.3, 14.n),
- wobei die Anteile von Segment und/oder Polygon und/oder Oberfläche, die von der Flüssigkeit eingenommen werden, die mit Hilfe von Punktsensoren gemessen wird, die auf den geometrischen Punkten (4.1, 4.2, 4.3, 14.n) positioniert sind.

13. Verfahren nach Anspruch 12, **dadurch gekennzeichnet, dass** in dem Schritt der Bestimmung des Gesamtvolumens der Flüssigkeit ein arithmetisches Mittel dieser Anteile, gewichtet mit der Länge der Segmente ([4.1, 4.2], [4.1, 4.3]) und/oder der Fläche der Polygone (T, Tn) und/oder der Fläche des Querschnitts (S), für mehrere oder alle möglichen Kombinationen von geometrischen Punkten berechnet wird.

14. Verfahren nach Anspruch 12 oder 13, **dadurch gekennzeichnet, dass** ein anfänglicher Kalibrierungsschritt (100) verwendet wird, um Anteile von 0 %, wenn der Tank leer ist, und 100 %, wenn der Tank voll ist, für alle Segmente ([4.1, 4.2], [4.1, 4.3]) und/oder alle Polygone (T, Tn) und/oder alle Abschnitte (S) zu definieren.

15. Verfahren nach einem der Ansprüche 12 bis 14, **dadurch gekennzeichnet, dass**, wenn ein aus den Sensormessungen berechneter Anteil des von der Flüssigkeit eingenommenen Segments ([4.1, 4.2], [4.1, 4.3]) und/oder Polygons (T, Tn) und/oder Querschnitts (S), der von der Flüssigkeit eingenommen wird, nicht zwischen 0 und 100 % liegt, der betreffende Sensor, der gegebenenfalls durch Abruf (106) mehrerer Messungen für mehrere Sensorkombinationen identifiziert wird, von den möglichen Kombinationen geometrischer Punkte ausgeschlossen wird.

## Claims

1. A tank (1, 10) for an aircraft turbojet, and in particular an oil tank for an aircraft turbojet, the tank comprising:
- a cavity (2) capable of containing a liquid;
- an envelope (3) delimiting the cavity (2); and
- a device (4.1, 4.2, 4.3, 14.n, 20, 30) for measuring the volume of liquid contained in said cavity (2);
**characterised in that**
the measuring device (4.1, 4.2, 4.3, 14.n, 20, 30) comprises at least three liquid detection point sensors, said at least three point sensors being disposed on the envelope so as to describe a polygon (T, Tn);
the measuring device (4.1, 4.2, 4.3, 14.n, 20, 30) is configured to estimate the total volume of liquid contained in the cavity by triangulation from the measurements of the at least three point sensors;
and **in that** the at least three point sensors define a plane (P) whose intersection with the envelope defines a section (S) of the tank (1), the measuring device (4.1, 4.2, 4.3, 14.n, 20, 30) being configured to calculate the proportion of said section (S) and/or the proportion of the area of said polygon that is occupied by the liquid to estimate the total volume of liquid.

2. Tank according to claim 1, **characterised in that** the at least three sensors comprise at least one transmitter and at least one receiver, the volume measuring device comprising a switch (20) for sequentially measuring the signals emitted by a plurality of predefined transmitter-receiver combinations, at least two combinations consisting of the same transmitter with two different respective receivers and/or at least two combinations consisting of the same receiver with two different respective transmitters, the switch (20) being automatically switched according to a cycle consisting of all predefined combinations and the measuring device (4.1, 4.2, 4.3, 14.n, 20, 30) being configured to evaluate the total volume of the liquid from the signals recorded during a cycle.

3. Tank according to claim 2, **characterised in that** the measuring device (4.1, 4.2, 4.3, 14.n, 20, 30) is configured to perform an average of liquid volume values calculated for a plurality of cycles.

4. Tank according to any one of claims 1 to 3, **characterised in that** the at least three point sensors: (i) comprise one or two transmitter(s) emitting radiation and respectively one or two receiver(s) capable of receiving this radiation, the radiation being acoustic or electromagnetic, especially X-ray, ultraviolet or infrared, the measuring device calculating the partial absorption of radiation by the liquid present between the transmitter(s) and the receiver(s); (ii) are capacitive proximity sensors or ultrasonic probes capable of detecting a presence of liquid in their vicinity; or (iii) comprise one or a plurality of anodes and one or a plurality of cathodes capable of forming capacitive gauges, the measuring device calculating the proportion of liquid occupying each anode-cathode segment by measuring the electrical capacitance between each anode and each cathode.

5. Tank according to any one of claims 1 to 4, **characterised in that** in the normal direction of assembly, the cavity has a height, the at least three point sensors being distributed over the majority or the entire height of the cavity (2) and/or the at least three point sensors define between them a plurality of triangles sweeping the majority of the cavity (2) and/or the at least three point sensors are distributed on the circumference of the envelope (3).

6. Tank according to any one of claims 1 to 5, **characterised in that** the point sensors are disposed on the outer face of the envelope (3), the envelope (3) preferably having at least one transparent portion to the right of the point sensors.

7. Tank according to any one of claims 1 to 6, **characterised in that** the at least three point sensors comprise at least four or at least six point sensors defining a polyhedron.

8. Tank according to any one of claims 1 to 7, **characterised in that** in the normal direction of assembly of the tank, the point sensors define a plurality of superimposed triangles, in particular according to the direction of measurement of the level in the tank, the measuring device (4.1, 4.2, 4.3, 14.n, 20, 30) being configured to estimate the volume of liquid contained in the cavity by triangulation from said superimposed triangles.

9. Method of implementing a tank (1, 10), **characterised in that** the tank (1, 10) is according to any one of claims 1 to 8, the method comprising a calibration step (100) of the device for determining the volume of liquid, in which reference signals emitted by the sensors are recorded when the tank (1, 10) is empty and when the tank (1, 10) is full, and/or for known values of volume of liquid for different orientations of the tank (1, 10), and **in that** prior to the calibration (100), the sensors are randomly disposed at the periphery of the cavity (2) of the tank (1, 10).

10. Method according to claim 9, **characterised in that** the material constituting the envelope (3) has a permittivity lower than that of the liquid intended to be received in the cavity (2).

11. Method according to any one of claims 9 to 10, **characterised in that** a defective sensor is replaced and the calibration of the replacement sensor is carried out by learning as a function of the signals emitted by the other sensors and possibly the signals of the defective sensor before it is detected as defective, and learning lasts until a confidence index is reached.

12. Method for determining the volume of liquid in a tank (1, 10), the tank comprising geometric points (4.1, 4.2, 4.3, 14.n) at the periphery of the cavity (2) that the liquid can occupy, the method comprising:
- a step of determining the proportion of the segment ([4.1, 4.2]) defined by the position of two geometric points (4.1, 4.2), which is occupied by the liquid; and/or
- a step of determining the area proportion of a polygon (T, Tn) defined by the position of three or more coplanar geometrical points, which is occupied by the liquid; and/or
- a step of determining the proportion of the area of a section (S) defined by the intersection of a plane defined by a polygon of three or more geometric coplanar points (4.1, 4.2, 4.3) and of the cavity (2) of the tank (1, 10), which is occupied by the liquid;
- and a step of determining the total volume of liquid from the proportions of segment and/or polygon and/or section occupied by the liquid for a plurality of possible combinations of points (4.1, 4.2, 4.3, 14.n),
the proportions of segment and/or polygon and/or area occupied by the liquid being measured using point sensors positioned on said geometric points (4.1, 4.2, 4.3, 14.n).

13. Method according to claim 12, **characterised in that** during the step of determining the total volume of liquid, an arithmetic mean of said proportions weighted by the length of the segments ([4.1, 4.2], [4.1, 4.3]) and/or the area of the polygons (T, Tn) and/or the area of the section (S), for a plurality or all possible combinations of geometric points, is calculated.

14. Method according to claim 12 or 13, **characterised in that** an initial calibration step (100) makes it possible to define proportions of 0% when the tank is empty and 100% when the tank is full for all the segments ([4.1, 4.2], [4.1, 4.3]) and/or all the polygons (T, Tn) and/or all the sections (S).

15. Method according to any one of claims 12 to 14, **characterised in that** when a proportion of segment ([4.1, 4.2], [4.1, 4.3]) and/or polygon (T, Tn) and/or section (S) occupied by the liquid, calculated from the measurements of the sensors, is not between 0 and 100%, the sensor concerned, if necessary identified by overlapping (106) of a plurality of measurements for a plurality of combinations of sensors, is excluded from the possible combinations of geometric points.
